# EUROPÄISCHE PATENTSCHRIFT

(11) **EP 3 146 584 B1**
(45) Veröffentlichungstag und Bekanntmachung des Hinweises auf die Patenterteilung: **27.02.2019**
(21) Anmeldenummer: 15744549.5
(22) Anmeldetag: 28.07.2015
(51) Int. Cl.: H01M 8/10, H01M 4/92, H01M 8/02

(54) **BRENNSTOFFZELLENANORDNUNG UND VERFAHREN ZUM BETREIBEN EINER BRENNSTOFFZELLENANORDNUNG**
FUEL CELL ASSEMBLY AND METHOD FOR OPERATING A FUEL CELL ASSEMBLY
SYSTÈME DE PILES À COMBUSTIBLE ET PROCÉDÉ DE FONCTIONNEMENT D'UN SYSTÈME DE PILES À COMBUSTIBLE

(30) Priorität: 01.08.2014 EP 14179495
(43) Veröffentlichungstag der Anmeldung: 29.03.2017
(73) Patentinhaber: Siemens Aktiengesellschaft, 80333 München (DE)
(72) Erfinder: BRANDT, Torsten, 91301 Forchheim (DE); DATZ, Armin, 91099 Poxdorf (DE); HAMMERSCHMIDT, Albert, 91056 Erlangen (DE); LATZEL, Silke, 91077 Kleinsendelbach (DE); LERSCH, Josef, 91336 Heroldsbach (DE); MATTEJAT, Arno, 91056 Erlangen (DE)
(86) Internationale Anmeldenummer: PCT/EP2015/067295
(87) Internationale Veröffentlichungsnummer: WO 2016/016254

(56) Entgegenhaltungen:
- US-A1- 2006 127 738
- US-A1- 2009 162 734
- US-A1- 2010 000 679

## Beschreibung

Die Erfindung betrifft eine Brennstoffzellenanordnung mit mindestens einer PEM-Brennstoffzelle zur Erzeugung von elektrischer Energie aus den Reaktandengasen Wasserstoff und Sauerstoff, umfassend mindestens eine Membran-Elektroden-Einheit, die eine mit Platin-Elektroden beschichtete Membran sowie beidseitig davon positioniert je eine poröse Gasdiffusionsschicht aufweist, oder die eine Membran sowie beidseitig davon positioniert je eine poröse Gasdiffusionsschicht, die mit einer Platin-Elektrode beschichtet ist, aufweist, umfassend weiterhin Bipolarplatten, die an den Gasdiffusionsschichten anliegen und im Betrieb durch ein Kühlmedium durchströmt sind. Die Erfindung betrifft weiterhin ein Verfahren zum Betreiben einer solchen Brennstoffzellenanordnung.

In PEM-Brennstoffzellen werden aus Wasserstoff und Sauerstoff in einem elektrochemischen Prozess Strom, Wärme und Wasser gebildet. Der prinzipielle Aufbau ist derart gestaltet, dass sich an eine Membran-Elektroden-Einheit (engl. membrane electrode assembly, MEA) Gasräume und Kühlräume in sogenannten Bipolarplatten anschließen. Die Membran-Elektroden-Einheit enthält insbesondere eine protonenleitende Membran, die beidseitig mit Platin-Elektroden (Katalysatorschicht) beschichtet ist. Diese sind wiederum von je einer gasdurchlässigen, elektronenleitenden Gasdiffusionsschicht bedeckt. Alternativ kann auch die Gasdiffusionsschicht auf einer der Membran zugewandten Seite mit der Platin-Elektrode (Katalysatorschicht) beschichtet sein. Die Gasdiffusionsschicht hat zudem die Aufgabe, das Produktwasser kathodenseitig aus der Entstehungszone an der Grenzschicht zu der Platin-Elektrode und der Membran zu entfernen. Zu diesem Zweck wird die Gasdiffusionsschicht, welche üblicherweise aus Kohlefasermaterial (Kohlepapier, Kohlefasergewebe oder Vlies) hergestellt ist, oberflächlich, d.h. auf den Kohlefasern bzw. in den Hohlräumen hydrophob gemacht.

Da in der Regel die im Brennstoffzellenbetrieb erzeugte Wärme durch einen Kühlmedienstrom, insbesondere einen Kühlwasserstrom, aus der Bipolarplatte entfernt wird, entsteht in der Bipolarplatte vom Kühlmediumeintritt zum Kühlmediumaustritt ein Wärmegradient, d.h. im Bereich des Kühlmediumaustritts herrscht eine höhere Temperatur als beim Kühlmediumeintritt. Häufig befindet sich im Bereich des Kühlmediumaustritts auch der Reaktandenaustritt (Sauerstoff und Wasserstoff). Auf der Sauerstoffseite entsteht eine große Menge von Produktwasser, das vollständig aus der Gasdiffusionssicht ausgebracht werden muss. Auf der Wasserstoffseite kann in diesem Bereich auf Grund der sehr guten Strömung der Wasserstoff effektiv umgesetzt werden. Dadurch entsteht im Bereich der Umsetzung des Wasserstoffs, der bereits durch den Kühlmediumstrom erwärmt ist, zusätzliche Abwärme, die zu weiterer Temperaturerhöhung führen kann.

Im Idealfall gibt es einen gleichmäßig ansteigenden Temperaturgradienten zwischen Kühlmediumeintritt und -austritt mit wenig oder gar keinen Temperaturerhöhungen an den Ecken oder Kanten der Bipolarplatte. In der Realität können jedoch an strömungstechnisch kritischen Stellen (wie z.B. Totzonen, Ecken) deutliche Temperaturerhöhungen (beispielsweise 10 bis 20 Grad K im Vergleich zum Kühlmediumaustritt)auftreten. Dieser Effekt kann in diesen kritischen Bereichen noch verstärkt werden, wenn die Kühlwasserdurchströmung der Bipolarplatte z.B. auf Grund von Fehlern (Verstopfung von Kühlkanälen, unbeabsichtigte Reduzierung der Kühlwasserpumpenleistung etc.) deutlich herabgesetzt wird. Im Extremfall kann dies durch verschiedene Mechanismen (beispielsweise niedrige Feuchte - Bildung von Wasserstoffperoxid und dadurch chemischer Angriff der Membran, mechanische Belastung durch Feucht-/Trockenzyklen) zur mechanischen Schwächung der Membran oder Dickenreduzierung bis hin zur Lochbildung führen, was zum Ausfall der Zelle und damit des gesamten Brennstoffzellenstacks führt.

Das Problem wird derzeit üblicherweise behandelt, indem versucht wird durch eine geeignete Optimierung der Strömungsgeometrie der Bipolarplatte derartige heiße Stellen zu vermeiden.

Ein anderer Lösungsansatz ist in US 8,617,760 B2 beschrieben. Gemäß diesem Dokument wird die protonenleitende Membran in kritischen Bereichen durch Einlagerung von Metallionen deaktiviert.

Aus der US 2009/0162734 A1 ist eine Brennstoffzellenanordnung mit einer PEM-Brennstoffzelle bekannt, bei der die Platin-Elektrode eine geringere Fläche als die Gasdiffusionsschicht aufweist, wobei über den gesamten Randbereich der Membran-Elektroden-Einheit, d.h. den gesamten Bereich um den äußeren Umfang der Membran-Elektroden-Einheit, die Gasdiffusionsschicht über der Platin-Elektrode übersteht. Durch diesen Überstand kann in Verbindung mit einer um den gesamten Randbereich der Membran-Elektroden-Einheit verlaufenden Dichtung und einer um den gesamten Randbereich der Membran-Elektroden-Einheit verlaufenden Harzschicht die Kontaktierung zwischen der Gasdiffusionsschicht und der Membran-Elektroden-Einheit sowie deren Abdichtung verbessert werden.

Aus der US 2010/000679 A1 ist zum einen eine PEM-Brennstoffzelle bekannt, bei der die Katalysatorschicht die gleiche Fläche wie die Gasdiffusionsschicht aufweist und somit die Gasdiffusionsschicht über den gesamten Bereich um den äußeren Umfang der Katalysatorschicht nicht über der Katalysatorschicht übersteht. Zum anderen ist eine PEM-Brennstoffzelle bekannt, bei der die Katalysatorschicht eine geringere Fläche wie die Gasdiffusionsschicht aufweist und somit die Gasdiffusionsschicht über den gesamten Bereich um den äußeren Umfang der Katalysatorschicht über der Katalysatorschicht übersteht. Aus der US 2006/127738 A1 ist ein Brennstoffzellenaufbau bekannt, in dem über den gesamten Randbereich der Membran-Elektroden-Einheit ein Kleber zwischen der Membran und den Gasdiffusionsschichten angeordnet ist. Als Kleber können zum Beispiel Acryl oder thermoplastische Elastomere verwendet werden. Die Anwesenheit des Klebers reduziert die Dehnbeanspruchung an den Rändern der Membran, die nicht durch Elektroden unterstützt werden. Der Kleber wirkt als Dichtung und verhindert somit eine chemische Degradierung der Membran. Da die Gasdiffusionsschichten porös sind, kann der Kleber in die Poren der Gasdiffusionsschichten eindringen.

Der Erfindung liegt die Aufgabe zugrunde, bei vorgegebener Geometrie der Bipolarplatte und ohne größere Einbußen bei der Erzeugung der elektrischen Energie Maßnahmen im Bereich der Membran-Elektroden-Einheit zu definieren, welche die o.g. Fehler verhindern.

Die Aufgabe wird erfindungsgemäß gelöst durch eine Brennstoffzellenanordnung mit mindestens einer PEM-Brennstoffzelle zur Erzeugung von elektrischer Energie aus den Reaktandengasen Wasserstoff und Sauerstoff, umfassend mindestens eine Membran-Elektroden-Einheit, die eine mit Platin-Elektroden beschichtete Membran sowie beidseitig davon positioniert je eine poröse Gasdiffusionsschicht aufweist, umfassend weiterhin Bipolarplatten, die an den Gasdiffusionsschichten anliegen und im Betrieb durch ein Kühlmedium durchströmt sind, wobei mindestens eine der Platin-Elektroden eine geringere Fläche als die Gasdiffusionsschicht aufweist, wobei für einen Teil eines Randbereichs der Membran-Elektroden-Einheit die Gasdiffusionsschicht über der Platin-Elektrode übersteht und für einen anderen Teil des Randbereichs der Membran-Elektroden-Einheit die Gasdiffusionsschicht nicht über der Platin-Elektrode übersteht.

Die Aufgabe wird weiterhin erfindungsgemäß gelöst durch ein Verfahren zum Betreiben einer derartigen Brennstoffzellenanordnung, wobei für einen Teil eines Randbereichs der Membran-Elektroden-Einheit die Platin-Elektrode ausgespart ist und die Gasdiffusionsschicht über der Platin-Elektrode übersteht, so dass der Aufbau eines elektrischen Potentials in diesem Teil des Randbereichs der Membran-Elektroden-Einheit verhindert wird und für einen anderen Teil des Randbereichs der Membran-Elektroden-Einheit die Platin-Elektrode nicht ausgespart ist und die Gasdiffusionsschicht nicht über der Platin-Elektrode übersteht, so dass der Aufbau eines elektrischen Potentials in diesem Teil des Randbereichs der Membran-Elektroden-Einheit nicht verhindert wird.

Die im Hinblick auf die Brennstoffzelle nachstehend angeführten Vorteile und bevorzugten Ausgestaltungen lassen sich sinngemäß auf das Verfahren übertragen.

Wie für den Fachmann offensichtlich ist, lassen sich die im Hinblick auf die Brennstoffzelle und das Verfahren nachstehend angeführten Vorteile und bevorzugten Ausgestaltungen auch auf eine Brennstoffzelle übertragen, bei der die Gasdiffusionsschicht mit der Platin-Elektrode (Katalysatorschicht) beschichtet ist.

Die Erfindung basiert auf der Idee durch die Platin-Elektrode an der thermisch kritischen Stelle wegzulassen, so dass die Gasdiffusionsschicht über der Platin-Elektrode übersteht und somit an dieser Stelle kein elektrochemisches Potential bzw. elektrochemische Reaktion im Hinblick auf die Entstehung von Wasserstoffperoxid vorhanden ist. Auf diese Weise lässt sich eine elektrochemische Reaktion an der Platin-Elektrode vermeiden, die entweder durch die Erzeugung von Wärme oder Potential zu einer Schwächung bzw. Beschädigung der Membran im betrachteten "gefährdeten" Bereich führt. Durch die Modifizierung der Platin-Elektrode in den "gefährdeten" Bereichen (d.h. Bereiche, die möglicherweise zu heiß oder anderweitig geschädigt werden können) lässt sich auch bei vorgegebenem Bipolarplatten-Design ein ausfallfreier Betrieb realisieren. In den anderen Randbereichen ohne Überstand kann dagegen weiterhin eine elektrochemische Reaktion an der Platin-Elektrode erfolgen, so dass die vorgenannten Maßnahmen ohne größere Einbußen bei der Erzeugung der elektrischen Energie in der Brennstoffzelle möglich sind.

Erfindungsgemäß ist der Überstand der Gasdiffusionsschicht über der Platin-Elektrode an thermisch belasteten Stellen der Bipolarplatte oder im Bereich eines Kühlmediumaustritts aus der Bipolarplatte vorgesehen, da auf Grund des Temperaturengradients zwischen dem Kühlmediumeintritt und dem Kühlmediumaustritt der Bipolarplatte im Bereich des Kühlmediumaustritts eine erhöhte Gefahr vor Überhitzung vorliegt.

Im Hinblick auf eine effiziente Wirkung der mechanischen Sperre ist gemäß einer bevorzugten Ausgestaltung im Bereich des Überstands durch eine mechanische Sperre zwischen der Gasdiffusionsschicht und der Membran der Zugang eines Reaktandengases zur Membran blockiert. Somit kann das Reaktandengas sich in der Gasdiffusionsschicht verteilen, erreicht jedoch an den kritischen Stellen nicht die Platin-Elektrode der Membran-Elektroden-Einheit.

Vorteilhafterweise ist die mechanische Sperre in diesem Fall eine gasundurchlässige Folie mit einer geringen Dicke, so dass die Folie störungsfrei zwischen der Gasdiffusionsschicht und der Membran-Elektroden-Einheit angebracht werden kann. Die Folie ist beispielsweise aus Teflon ausgebildet. Wesentlich für die Materialauswahl auf der Kathodenseite ist hierbei eine gute Sauerstoffbeständigkeit.

Gemäß einer weiteren bevorzugten Ausgestaltung ist die mechanische Sperre in den Poren der Gasdiffusionsschicht enthalten. Diese Ausgestaltung zeichnet sich durch konstruktive Änderungen lediglich an der Gasdiffusionsschicht aus, alle anderen Komponenten der Brennstoffzelle bleiben unverändert. Hierbei ist die mechanische Sperre bevorzugt ein Acrylkleber oder ein Fluorthermoplast. Die mechanische Sperre ist hierbei ein aus einem Polymer-Füllstoff, z.B. aus Fluorthermoplast ausgebildet, der durch eine entsprechende thermische Behandlung eingebracht wird. Auf der Kathodenseite ist entsprechende Sauerstoffbeständigkeit notwendig.

Ein Ausführungsbeispiel der Erfindung wird anhand einer Zeichnung näher erläutert. Hierin zeigen:
- FIG 1: eine erste Draufsicht auf eine Membran-Elektroden-Einheit und eine aufliegende Gasdiffusionsschicht, wobei ein erster, beispielhafter, kritischer Bereich gekennzeichnet ist,
- FIG 2: eine zweite Draufsicht auf eine Membran-Elektroden-Einheit und eine aufliegende Gasdiffusionsschicht, wobei ein zweiter, beispielhafter, kritischer Bereich gekennzeichnet ist,
- FIG 3: im Querschnitt eine erste Ausführung einer Brennstoffzelle, und
- FIG 4: im Querschnitt eine zweite Ausführung einer Brennstoffzelle, und
- FIG 5: im Querschnitt eine dritte Ausführung einer Brennstoffzelle.

Gleiche Bezugszeichen haben in den verschieden Figuren die gleiche Bedeutung.

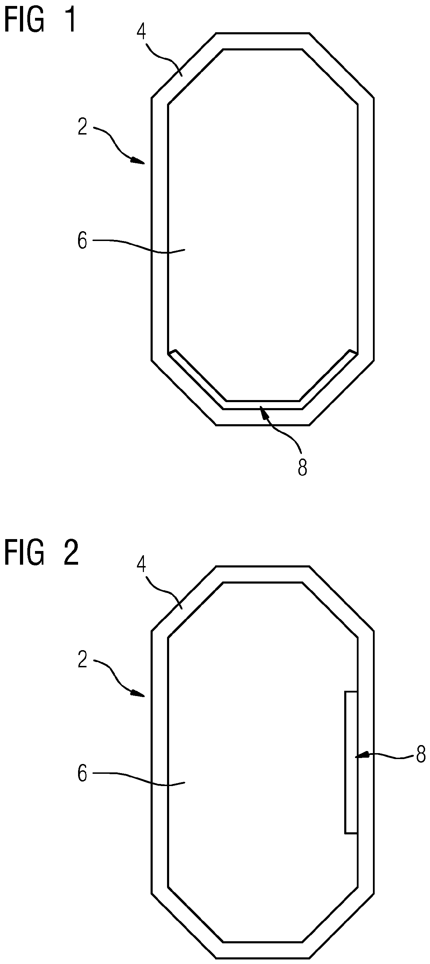

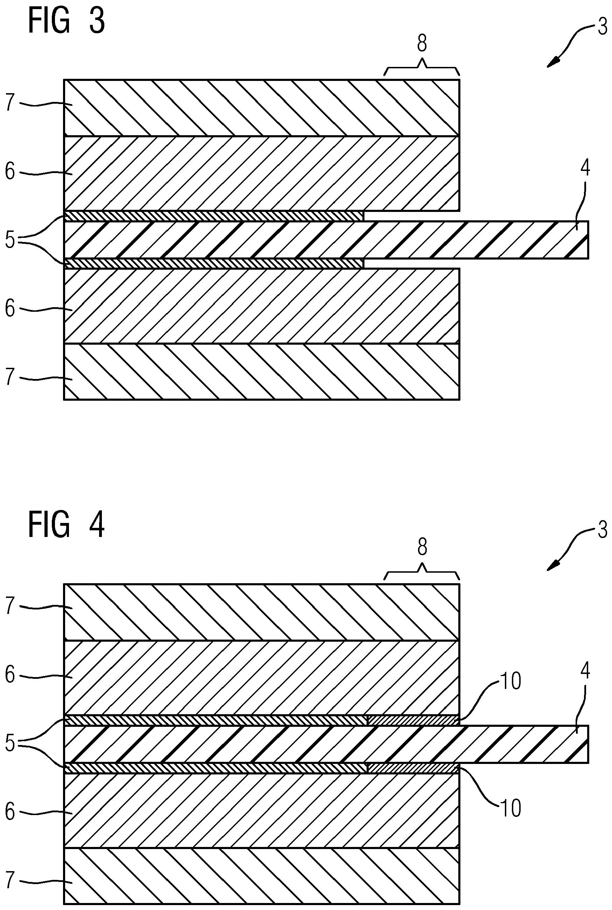

Aus FIG 1 und FIG 2 ist jeweils eine Membran-Elektroden-Einheit 2 entnehmbar, welche Teil einer hier nicht näher gezeigten Brennstoffzellenanordnung 3 ist, die im gezeigten Ausführungsbeispiel aus einer einzigen PEM-Brennstoffzelle besteht. Die PEM-Brennstoffzelle 3 ist im Querschnitt in FIG 3 bis FIG 5 dargestellt.

Die Membran-Elektroden-Einheit 2 umfasst eine protonenleitende Membran 4, die beidseitig mit einer hier nicht ersichtlichen Katalysatorschicht aus Platin, die eine Platin-Elektrode 5 bildet, beschichtet ist (siehe FIG 3 bis FIG 5). Auf der Membran 4 ist beidseitig je eine Gasdiffusionsschicht 6 aufgelegt, welche die Platin-Elektrode 5 kontaktiert. Alternativ kann die Katalysatorschicht aus Platin, die eine Platin-Elektrode 5 bildet, auch auf der Gasdiffusionsschicht 6 auf der der Membran 4 zugewandten Seite aufgebracht sein.

Die Brennstoffzelle 3 umfasst zudem angrenzend an die Gasdiffusionsschicht 6 eine aus FIG 3 bis FIG 5 ersichtliche Bipolarplatte 7 (in Wirklichkeit ist zumindest teilweise ein Raum zwischen der Bipolarplatte 7 und der Gasdiffusionsschicht 6 vorhanden), welche im Betrieb durch ein Kühlmedium, insbesondere Kühlwasser, durchströmt ist. Dadurch wird in der Membran-Elektroden-Einheit 2 entstehende Wärme abtransportiert.

In FIG 1 und FIG 2 sind mit dem Bezugszeichen 8 zwei unterschiedlich angeordnete beispielhafte kritische Stellen gekennzeichnet, an denen mit erhöhter Wahrscheinlichkeit eine Störung der Funktion der Membran 6 oder eine lokale Zerstörung der Membran 6 auftreten kann. Beispielsweise liegt eine solche kritische Stelle 8 beim Kühlmediumaustritt aus der Bipolarplatte 7, wie dies in FIG 1 gezeigt ist. Die kritischen Stellen 8 befinden sich dabei stets im Randbereich der Membran-Elektroden-Einheit 2 bzw. der Gasdiffusionsschicht 6.

Unter Randbereich wird hierbei der Bereich um den äußeren Umfang der Membran-Elektroden-Einheit 2 verstanden.

In FIG 3 ist eine erste Anordnung der Brennstoffzelle 3 gezeigt, bei der an einer kritischen Stelle 8 im Randbereich die Platin-Elektroden 5 ausgespart sind, so dass für diesen Teil des Randbereich die Gasdiffusionsschicht 6 über der Platin-Elektrode 5 übersteht. Hierdurch weisen die Platin-Elektroden 5 eine geringere Fläche als die Gasdiffusionsschicht 6 auf. Auf diese Weise wird verhindert, dass sich an der kritischen Stelle 8 ein elektrochemisches Potential bildet.

In FIG 4 ist ebenfalls die Platin-Elektrode 5 ausgespart, mit dem Unterschied zu FIG 3, dass eine folienartige mechanische Sperre 10 nach Art einer Folie zwischen der Membran 4 und der Gasdiffusionsschicht 6 vorgesehen ist. Somit wird an der kritischen Stelle 8 die Platin-Elektrode 5 durch die Folie 10 ersetzt.

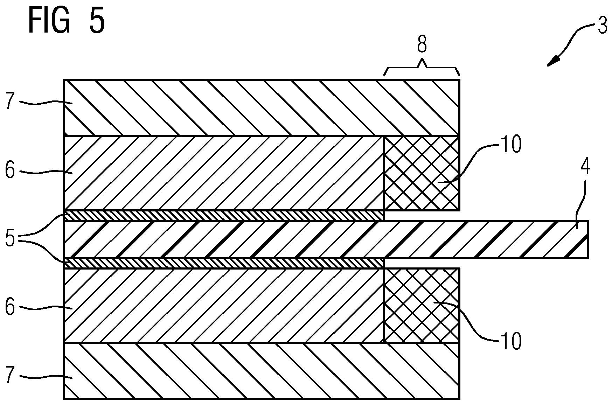

In FIG 5 ist eine dritte alternative Ausführung der Brennstoffzelle 3 dargestellt, bei der die poröse Gasdiffusionsschicht 6 mit der mechanischen Sperre 10 aufgefüllt ist und zwar nur im Bereich der kritischen Stelle 8, an der die Platin-Elektrode 5 weggelassen ist. Die mechanischen Sperre 10 ist hierbei eine Masse z.B. aus einem thermoplastischen, fluorierten Polymerfüllstoff, einem Acrylkleber.

## Patentansprüche

1. Brennstoffzellenanordnung (3) mit mindestens einer PEM-Brennstoffzelle zur Erzeugung von elektrischer Energie aus den Reaktandengasen Wasserstoff und Sauerstoff, umfassend mindestens eine Membran-Elektroden-Einheit (2), die eine mit Platin-Elektroden (5) beschichtete Membran (4) sowie beidseitig davon positioniert je eine poröse Gasdiffusionsschicht (6) aufweist, umfassend weiterhin Bipolarplatten (7), die an den Gasdiffusionsschichten (6) anliegen und im Betrieb durch ein Kühlmedium durchströmt sind, wobei mindestens eine der Platin-Elektroden (5) eine geringere Fläche als die Gasdiffusionsschicht (6) aufweist,
**dadurch gekennzeichnet, dass** für einen Teil eines Randbereichs der Membran-Elektroden-Einheit (2) die Gasdiffusionsschicht (6) über der Platin-Elektrode (5) übersteht und für einen anderen Teil des Randbereichs der Membran-Elektroden-Einheit (2) die Gasdiffusionsschicht (6) nicht über der Platin-Elektrode (5) übersteht, wobei der Randbereich der Bereich um den äußeren Umfang der Membran-Elektroden-Einheit (2) ist und wobei der Überstand der Gasdiffusionsschicht (6) über der Platin-Elektrode (5) im Bereich eines Kühlmediumaustritts aus der Bipolarplatte (7) oder an thermisch belasteten Stellen der Bipolarplatte (7) vorgesehen ist.

2. Brennstoffzellenanordnung (3) mit mindestens einer PEM-Brennstoffzelle zur Erzeugung von elektrischer Energie aus den Reaktandengasen Wasserstoff und Sauerstoff, umfassend mindestens eine Membran-Elektroden-Einheit (2), die eine Membran (4) sowie beidseitig davon positioniert je eine poröse Gasdiffusionsschicht (6), die mit einer Platin-Elektrode (5) beschichtet ist, aufweist, umfassend weiterhin Bipolarplatten (7), die an den Gasdiffusionsschichten (6) anliegen und im Betrieb durch ein Kühlmedium durchströmt sind, wobei mindestens eine der Platin-Elektroden (5) eine geringere Fläche als die Gasdiffusionsschicht (6) aufweist,
**dadurch gekennzeichnet, dass** für einen Teil eines Randbereichs der Membran-Elektroden-Einheit (2) die Gasdiffusionsschicht (6) über der Platin-Elektrode (5) übersteht und für einen anderen Teil des Randbereichs der Membran-Elektroden-Einheit (2) die Gasdiffusionsschicht (6) nicht über der Platin-Elektrode (5) übersteht, wobei der Randbereich der Bereich um den äußeren Umfang der Membran-Elektroden-Einheit (2) ist und wobei der Überstand der Gasdiffusionsschicht (6) über der Platin-Elektrode (5) im Bereich eines Kühlmediumaustritts aus der Bipolarplatte (7) oder an thermisch belasteten Stellen der Bipolarplatte (7) vorgesehen ist.

3. Brennstoffzelle (3) nach Anspruch 1 oder 2,
**dadurch gekennzeichnet, dass** im Bereich des Überstands durch eine mechanische Sperre (10) zwischen der Gasdiffusionsschicht (6) und der Membran (4) der Zugang mindestens eines der Reaktandengase zur Membran (4) blockiert ist.

4. Brennstoffzelle (3) nach Anspruch 3,
**dadurch gekennzeichnet, dass** die mechanische Sperre (10) eine gasundurchlässige Folie ist.

5. Brennstoffzelle (3) nach Anspruch 3,
**dadurch gekennzeichnet, dass** die mechanische Sperre (10) in den Poren der Gasdiffusionsschicht (6) enthalten ist.

6. Brennstoffzelle (3) nach Anspruch 5,
**dadurch gekennzeichnet, dass** die mechanische Sperre (10) ein Acrylkleber oder ein Fluorthermoplast ist.

7. Verfahren zum Betreiben einer Brennstoffzellenanordnung (3) nach einem der vorhergehenden Ansprüche,
**dadurch gekennzeichnet, dass** für einen Teil eines Randbereichs der Membran-Elektroden-Einheit (2) die Platin-Elektrode (5) ausgespart ist und die Gasdiffusionsschicht (6) über der Platin-Elektrode (5) übersteht, so dass der Aufbau eines elektrochemischen Potentials in diesem Teil des Randbereichs der Membran-Elektroden-Einheit (2) verhindert wird, und für einen anderen Teil des Randbereichs der Membran-Elektroden-Einheit (2) die Platin-Elektrode (5) nicht ausgespart ist und die Gasdiffusionsschicht (6) nicht über der Platin-Elektrode (5) übersteht, so dass der Aufbau eines elektrochemischen Potentials in diesem Teil des Randbereichs der Membran-Elektroden-Einheit (2) nicht verhindert wird, wobei der Überstand der Gasdiffusionsschicht (6) über der Platin-Elektrode (5) im Bereich eines Kühlmediumaustritts aus der Bipolarplatte (7) oder an thermisch belasteten Stellen der Bipolarplatte (7) vorgesehen ist.

## Claims

1. Fuel cell assembly (3) with at least one PEM fuel cell for generating electrical energy from the reactant gases hydrogen and oxygen, comprising at least one membrane/electrode unit (2) which has a membrane (4) coated with platinum electrodes (5) and has, respectively positioned on each side thereof, a porous gas diffusion layer (6), further comprising bipolar plates (7) which lie against the gas diffusion layers (6) and through which, during operation, a coolant flows, wherein at least one of the platinum electrodes (5) has a smaller area than the gas diffusion layer (6),
**characterised in that**, for a part of an edge region of the membrane/electrode unit (2), the gas diffusion layer (6) protrudes beyond the platinum electrode (5) and for another part of the edge region of the membrane/electrode unit (2), the gas diffusion layer (6) does not protrude beyond the platinum electrode (5), wherein the edge region is the region round the outer periphery of the membrane/electrode unit (2) and wherein the protrusion of the gas diffusion layer (6) beyond the platinum electrode (5) is provided in the region of a coolant exit from the bipolar plate (7) or at thermally loaded sites of the bipolar plate (7).

2. Fuel cell assembly (3) with at least one PEM fuel cell for generating electrical energy from the reactant gases hydrogen and oxygen, comprising at least one membrane/electrode unit (2) which has a membrane (4) and, respectively positioned on each side thereof, a porous gas diffusion layer (6) which is coated with a platinum electrode (5), further comprising bipolar plates (7) which lie against the gas diffusion layers (6) and through which, during operation, a coolant flows, wherein at least one of the platinum electrodes (5) has a smaller area than the gas diffusion layer (6),
**characterised in that**, for a part of an edge region of the membrane/electrode unit (2), the gas diffusion layer (6) protrudes beyond the platinum electrode (5) and for another part of the edge region of the membrane/electrode unit (2), the gas diffusion layer (6) does not protrude beyond the platinum electrode (5), wherein the edge region is the region round the outer periphery of the membrane/electrode unit (2) and wherein the protrusion of the gas diffusion layer (6) beyond the platinum electrode (5) is provided in the region of a coolant exit from the bipolar plate (7) or at thermally loaded sites of the bipolar plate (7).

3. Fuel cell (3) according to claim 1 or 2,
**characterised in that**, in the region of the protrusion, the access by at least one of the reactant gases to the membrane (4) is blocked by a mechanical block (10) between the gas diffusion layer (6) and the membrane (4).

4. Fuel cell (3) according to claim 3,
**characterised in that** the mechanical block (10) is a gas-impermeable film.

5. Fuel cell (3) according to claim 3,
**characterised in that** the mechanical block (10) is contained in the pores of the gas diffusion layer (6).

6. Fuel cell (3) according to claim 5,
**characterised in that** the mechanical block (10) is an acrylic adhesive or a fluorothermoplastic.

7. Method for operating a fuel cell assembly (3) according to one of the preceding claims,
**characterised in that**, for a part of an edge region of the membrane/electrode unit (2), the platinum electrode (5) is recessed and the gas diffusion layer (6) protrudes beyond the platinum electrode (5) so that the formation of an electrical potential in this part of the edge region of the membrane/electrode unit (2) is prevented and for another part of the edge region of the membrane/electrode unit (2), the platinum electrode (5) is not recessed and the gas diffusion layer (6) does not protrude beyond the platinum electrode (5) so that the formation of an electrochemical potential in this part of the edge region of the membrane/electrode unit (2) is not prevented, wherein the protrusion of the gas diffusion layer (6) beyond the platinum electrode (5) is provided in the region of a coolant exit from the bipolar plate (7) or at thermally loaded sites of the bipolar plate (7).

## Revendications

1. Système (3) de piles à combustible, comprenant au moins une pile à combustible PEM de production d'énergie électrique à partir des gaz réactifs, hydrogène et oxygène, comprenant au moins une unité (2) membrane-électrodes, qui a une membrane (4) revêtue d'électrodes (5) de platine, ainsi que placée des deux côtés de celle-ci, respectivement, une couche (6) poreuse de diffusion des gaz, comprenant, en outre, des plaques (7) bipolaires, qui s'appliquent aux couches (6) de diffusion des gaz et qui, en fonctionnement, sont traversées par un fluide de refroidissement, dans lequel au moins l'une des électrodes (5) de platine a une surface plus petite que la couche (6) de diffusion des gaz,
**caractérisé en ce que**, pour une partie d'une région de bord de l'unité (2) membrane-électrodes, la couche (6) de diffusion des gaz dépasse de l'électrode (5) de platine et, pour une autre partie de la région de bord de l'unité (2) membrane-électrodes, la couche (6) de diffusion des gaz ne dépasse pas de l'électrode (5) de platine, la région de bord étant la région autour du pourtour extérieur de l'unité (2) membrane-électrodes et dans lequel le dépassement de la couche (6) de diffusion des gaz, au-delà de l'électrode (5) de platine, est prévu dans la région d'une sortie de fluide de refroidissement de la plaque (7) bipolaire ou en des points chargés thermiquement de la plaque (7) bipolaire.

2. Système (3) de piles à combustible, comprenant au moins une pile à combustible PEM de production d'énergie électrique à partir des gaz réactifs, hydrogène et oxygène, comprenant au moins une unité (2) membrane-électrodes, qui a une membrane (4), ainsi que placée des deux côtés de celle-ci, respectivement, une couche (6) poreuse de diffusion des gaz, qui est revêtue d'une électrode (5) de platine, comprenant, en outre, des plaques (7) bipolaires, qui s'appliquent aux couches (5) de diffusion des gaz et qui, en fonctionnement, sont traversées par un fluide de refroidissement, au moins l'une des électrodes (5) de platine ayant une surface plus petite que la couche (6) de diffusion des gaz,
**caractérisé en ce que**, pour une partie d'une région de bord de l'unité (2) membrane-électrodes, la couche (6) de diffusion des gaz dépasse de l'électrode (5) de platine et, pour une autre partie de la région de bord de l'unité (2) membrane-électrodes, la couche (6) de diffusion des gaz ne dépasse pas de l'électrode (5) de platine, la région de bord étant la région autour du pourtour extérieur de l'unité (2) membrane-électrodes et dans lequel le dépassement de la couche (6) de diffusion des gaz, au-delà de l'électrode (5) de platine, est prévu dans la région d'une sortie de fluide de refroidissement de la plaque (7) bipolaire ou en des points chargés thermiquement de la plaque (7) bipolaire.

3. Système (3) de piles à combustible suivant la revendication 1 ou 2,
**caractérisé en ce que**, dans la région du dépassement, l'accès d'au moins l'un des gaz réactifs à la membrane (4) est bloqué par une barrière (10) mécanique entre la couche (6) de diffusion des gaz et la membrane (4).

4. Système (3) de piles à combustible suivant la revendication 3,
**caractérisé en ce que** la barrière (10) mécanique est une feuille imperméable au gaz.

5. Système (3) de piles à combustible suivant la revendication 3,
**caractérisé en ce que** la barrière (10) mécanique est contenue dans les pores de la couche (6) de diffusion des gaz.

6. Système (3) de piles à combustible suivant la revendication 5,
**caractérisé en ce que** la barrière (10) mécanique est une colle acrylique ou une matière thermoplastique fluorée.

7. Procédé pour faire fonctionner un système (3) de piles à combustible suivant l'une des revendications précédentes, **caractérisé en ce que** pour une partie d'une région de bord de l'unité (2) membrane-électrodes est évidée et la couche (6) de diffusion des gaz dépasse de l'électrode (5) de platine, de manière à empêcher l'établissement d'un potentiel électrochimique dans cette partie de la région de bord de l'unité (2) membrane-électrodes, et pour une autre partie de la région de bord de l'unité (2) membrane-électrodes, l'électrode (5) de platine n'est pas évidée et la couche (6) de diffusion des gaz ne dépasse pas de l'électrode (5) de platine, de manière à ne pas empêcher l'établissement d'un potentiel électrochimique dans cette partie de la région de bord de l'unité (2) membrane-électrodes, le dépassement de la couche (6) de diffusion des gaz de l'électrode (5) de platine étant prévu dans la région d'une sortie de fluide de refroidissement de la plaque (7) bipolaire ou en des points chargés thermiquement de la plaque (7) bipolaire.
